# EUROPEAN PATENT SPECIFICATION

(11) **EP 4 668 789 B1**
(45) Date of publication and mention of the grant of the patent: **13.05.2026**
(21) Application number: 24183745.9
(22) Date of filing: 21.06.2024
(51) Int. Cl.: H04W 4/02, H04L 67/12, H04W 4/38, H04W 4/70

(54) **METHOD FOR USING A USER EQUIPMENT FOR REQUESTING AND/OR INITIATING A WIRELESS SENSING SERVICE OPERATION PROVIDED BY A MOBILE COMMUNICATION NETWORK, USER EQUIPMENT, SYSTEM OR TELECOMMUNICATIONS NETWORK, PROGRAM AND COMPUTER-READABLE MEDIUM**
VERFAHREN ZUM ANFORDERN UND/ODER STARTEN EINES FUNKERFASSUNGSDIENSTES
PROCÉDÉ D'UTILISATION D'UN ÉQUIPEMENT UTILISATEUR POUR DEMANDER ET/OU LANCER UN SERVICE DE DÉTECTION SANS FIL

(43) Date of publication of application: 24.12.2025
(73) Proprietor: Deutsche Telekom AG, 53113 Bonn (DE)
(72) Inventor: ALEKSIEV, Vasil, 1220 Wien (AT)
(74) Representative: Schwöbel, Thilo K.

(56) References cited:
- WO-A1-2023/159488
- WO-A1-2024/022986

## Description

### BACKGROUND

The present invention relates a method for using a user equipment for requesting and/or initiating a wireless sensing service operation provided by a mobile communication network, the mobile communication network comprising or having a core network and the user equipment being connected to the mobile communication network either via a radio access network of the mobile communication network, or via a further radio access network of another mobile communication network, wherein the mobile communication network and/or the radio access network and/or the further radio access network comprises a sensing function.

Additionally, the present invention relates to a user equipment for being used for requesting and/or initiating a wireless sensing service operation provided by a mobile communication network, to which the user equipment is connected either via a radio access network of the mobile communication network, or via a further radio access network of another mobile communication network, wherein the user equipment is configured to communicate with a sensing function of the mobile communication network and/or of the radio access network and/or of the further radio access network.

Furthermore, the present invention relates to a system or to a telecommunications network for using a user equipment for requesting and/or initiating a wireless sensing service operation provided by a mobile communication network, the mobile communication network comprising or having a core network and the user equipment being connected to the mobile communication network either via a radio access network of the mobile communication network, or via a further radio access network of another mobile communication network, wherein the mobile communication network and/or the radio access network and/or the further radio access network comprises a sensing function.

Furthermore, the present invention relates to a program and to a computer-readable medium for using a user equipment for requesting and/or initiating a wireless sensing service operation provided by a mobile communication network according to the inventive method.

In conventionally known mobile communication networks - especially regarding 5G networks (or 5G systems, 5GS) -, it is known to use, or to provide, an integrated sensing and communication, ISAC, service, cf. e.g. TS 22.137.

According to such an integrated sensing and communication service, subject to (network) operator's policy, the 5G network shall provide secure means for a trusted third-party to request 5G wireless sensing service based on specific parameters (e.g., refresh rate, period of time, sensing KPIs, geographical location) and to receive the corresponding sensing results.
Furthermore subject to (network) operator's policy, the 5G network may enable secure means for a trusted third party to provide sensing assistance information. In this respect, sensing assistance information especially corresponds to information that is provided to the 5G system from a trusted third-party and can be used to support the derivation of a sensing result. Especially, examples of sensing assistance information might be map information, area information, a user equipment identifier information attached to or in the proximity of the sensing target, user equipment position information, user equipment velocity information, etc.

However, in conventionally known mobile communication networks, it is not clear, or, it cannot be assured, that the 5G network (or event 6G network) is actually able to provide the requested sensing service quality and whether such quality can be negotiated.

WO 2023/159488 A1 describes a 5G system with an SF in the core that can be invoked by a UE or AF, AMF selects an SF, the SF selects RAN/UE and the sensing method, performs sensing, returns a sensing service response (with the sensing result) to the UE.

WO 2024/022986 A1 discloses in Fig 4 a complete sensing service flow involving UE, AMF, and a sensing function (SF). Specifically, step 401b directly addresses UE-initiated sensing requests, and step 407b concerns UE receiving the sensing service response.

### SUMMARY

An object of the present invention is to provide a technically simple, effective and cost-effective solution for providing a wireless sensing service operation by a mobile communication network. A further object of the present invention is to provide a corresponding user equipment, a corresponding system or telecommunications network, and a corresponding program and computer-readable medium.

The object of the present invention is achieved by a method for using a user equipment for requesting and/or initiating a wireless sensing service operation provided by a mobile communication network, the mobile communication network comprising or having a core network and the user equipment being connected to the mobile communication network either via a radio access network of the mobile communication network, or via a further radio access network of another mobile communication network, wherein the mobile communication network and/or the radio access network and/or the further radio access network comprises a sensing function,
wherein, in order to handle or conduct the requested wireless sensing service operation, the method comprises the following steps:
-- in a first step, the user equipment transmits an sensing request message, wherein by means of the sensing request message, the user equipment requests to be provided with the requested wireless sensing service operation,
-- in a second step, the user equipment receives a sensing response message responding to the sensing request message, the sensing response message indicating an offered wireless sensing service operation that is able to be provided by the mobile communication network, wherein the offered wireless sensing service operation differs from the requested wireless sensing service operation,
-- in a third step, the user equipment transmits an sensing request confirmation message, wherein by means of the sensing request confirmation message, the user equipment confirms to be provided with sensing services according to the offered wireless sensing service operation.

According to the present invention, it is advantageously possible that the user equipment itself has a mechanism to request a sensing (or integrated sensing and communication) service and provide the information about the needed parameters of that service. According to different embodiments of the present invention, such a request (for sensing (or integrated sensing and communication) service) and/or such information regarding the needed parameters of that service are able to be transmitted or communicated in different manners and/or using different mechanisms: For example, this is possible to be realized using an application (function) - i.e. typically involving an application server, AS, associated with that application - which the user equipment is using, or, alternatively, directly via the network layer (i.e. typically using a network function or service (of the (core network of the) mobile communication network) such as, e.g., the access and mobility management function. Especially and advantageously according to the present invention, there is preferably a mechanism for negotiating the sensing service quality (of the requested integrated sensing and communication service).

Hence, advantageously according to the present invention, it is possible to use a user equipment for requesting and/or initiating a wireless sensing service operation provided by the mobile communication network. Typically, the mobile communication network comprises or has a core network and the user equipment is connected to the mobile communication network either via a radio access network of the mobile communication network, or via a further radio access network of another mobile communication network. According to the present invention, the mobile communication network and/or the radio access network and/or the further radio access network comprises a sensing function.

In order to handle or conduct the requested wireless sensing service operation, the method comprises the following steps:
-- in a first step, the user equipment transmits an sensing request message, wherein by means of the sensing request message, the user equipment requests to be provided with the requested wireless sensing service operation,
-- in a second step, the user equipment receives a sensing response message responding to the sensing request message, the sensing response message indicating an offered wireless sensing service operation that is able to be provided by the mobile communication network, wherein the offered wireless sensing service operation differs from the requested wireless sensing service operation,
-- in a third step, the user equipment transmits an sensing request confirmation message, wherein by means of the sensing request confirmation message, the user equipment confirms to be provided with sensing services according to the offered wireless sensing service operation.

This advantageously provides the possibility, according to the present invention, to provide procedures, service flows and APIs (application programming interfaces) such that a wireless sensing service operation and integrated sensing and communication services are able to be used flexibly and efficiently.

According to the present invention, it is furthermore advantageously possible and preferred that the sensing request message comprises one or a plurality of indications or pieces of information out of the following:
-- a location information of the user equipment or an indication thereof,
-- a identifier information of the user equipment or an indication thereof,
-- a sensing area information or an indication thereof, the sensing area information especially being relative to the location of the user equipment and especially indicates a radius in meters around the user equipment for which sensing and/or detection of obstacles is required or requested,
-- a sensing capability information of the user equipment or an indication thereof,
-- a duration information or an indication thereof of the requested wireless sensing service operation,
-- a sensing performance information or an indication thereof, especially regarding the quality of the requested wireless sensing service operation, especially related to one of the following: the accuracy of detected objects' positioning estimates, the accuracy of velocity estimates of detected objects, the spatial resolution, the latency and the sensing refresh rate..

It is thereby advantageously possible to realize and implement the inventive method in a comparatively simple and efficient manner.

Furthermore, it is advantageously possible and preferred according to the present invention that, especially subsequent to the first step, if the user equipment has specific sensing priority in the mobile communication network database, especially in the unified data management, UDM, or as a configured user equipment policy in the Policy Control Function, PCF, the mobile communication network confirms the requested wireless sensing service.

It is thereby advantageously possible to realize and implement the inventive method in a comparatively simple and efficient manner.

According to the present invention, it is furthermore advantageously possible and preferred that, especially subsequent to the second step, the user equipment receives a further sensing response message, the further sensing response message indicating a further offered wireless sensing service operation that is able to be provided by the mobile communication network, wherein the further offered wireless sensing service operation differs from the offered wireless sensing service operation.

It is thereby advantageously possible to realize and implement the inventive method in a comparatively simple and efficient manner.

Furthermore, it is advantageously possible and preferred according to the present invention that, especially subsequent to the third step, if the user equipment has a sufficient priority in the mobile communication network database, especially in the Unified Data Management, UDM, or as a configured user equipment policy in the Policy Control Function, PCF, the mobile communication network cannot change, or offer a further change or modification, in the wireless sensing service operation that has already been confirmed by the user equipment and is able to be provided by the mobile communication network.

It is thereby advantageously possible to efficiently realize and implement the inventive method in a comparatively simple and flexible manner.

Furthermore, it is advantageously possible and preferred according to the present invention that, especially subsequent to the third step, if the user equipment does not have a sufficient priority in the mobile communication network database, especially in the Unified Data Management, UDM, or as a configured user equipment policy in the Policy Control Function, PCF, the mobile communication network can change, or offer a further change or modification, in the wireless sensing service operation that has already been confirmed by the user equipment.

It is thereby advantageously possible to realize and implement the inventive method in a comparatively simple and efficient manner.

Furthermore, it is advantageously possible and preferred according to the present invention that, the priority information of the user equipment is stored in the memory of the user equipment or in the USIM of the user equipment and is indicated to the mobile communication network in the sensing request.

It is thereby advantageously possible to realize and implement the inventive method in a comparatively simple and efficient manner.

Furthermore, it is advantageously possible and preferred according to the present invention that the sensing response message and/or the further sensing response message is initiated by the sensing function and transmitted to the user equipment and/or to an application function or application server (AF/AS),
wherein especially, if the sensing request message does not comprise a duration information or an indication thereof of the requested wireless sensing service operation, a timer is started in the sensing function for which to report the sensing results, wherein after expiry of the requested time duration or configurable default timer, the sensing function transmits a notification to the user equipment and/or to the application function or application server (AF/AS) for ending the timer and stopping the requested wireless sensing service operation.

It is thereby advantageously possible to realize and implement the inventive method in a comparatively simple and efficient manner.

Furthermore, it is advantageously possible and preferred according to the present invention that the mobile communication network comprises an access and mobility management function, wherein the sensing request message and/or the sensing request confirmation message is transmitted using a non-access stratum message, especially an UL NAS TRANSPORT message, wherein especially the interface of the access and mobility management function is a service-based architecture,
wherein especially, the sensing response message and/or the further sensing response message is transmitted using a non-access stratum message, especially an DL NAS TRANSPORT message or initiating a network triggered service request to transfer the sensing result for the requested time period.

It is thereby advantageously possible to realize and implement the inventive method in a comparatively simple and efficient manner.

Furthermore, it is advantageously possible and preferred according to the present invention that the sensing function checks for existing sensing operations in the target sensing service area of the requested wireless sensing service operation, wherein
-- in case of existing sensing operations in the target sensing service area of the requested wireless sensing service operation, the sensing function starts sending sensing results towards the user equipment or the application function or application server (AF/AS), and
-- in case of a lack of existing sensing operations in the target sensing service area of the requested wireless sensing service operation, the sensing function - prior to sending sensing results towards the user equipment or the application function or application server (AF/AS) - starts sensing operation, especially by means of at least one out of the following:
   -- the sensing function determines the sensing transmitters and/or sensing receivers and/or their capabilities for the requested wireless sensing service operation
   -- the sensing function checks if there are specific constraints in the respective area, especially regarding restrictions regarding sensing operation and/or the sensing transmitters and/or sensing receivers having the required capabilities,
   -- the sensing function configures the sensing transmitters and/or sensing receivers.

It is thereby advantageously possible to realize and implement the inventive method in a comparatively simple and efficient manner.

Furthermore, it is advantageously possible and preferred according to the present invention that the sensing function is or corresponds to an integrated sensing and communication function, ISACF,
wherein especially there are at least three types of base stations configurations for sensing, namely:
-- the sensing function, especially located in base stations, is configured to have priority for communication and sensing capability is only working when there are free resources from communication;
-- the sensing function, especially located in base stations, is configured to have a certain static percentage reserved for communication and certain percentage reserved for sensing, wherein in case that this threshold is reached, to stop further attempts for communication or for sensing;
-- the sensing function, especially located in base stations, is configured to have specific percentage for communication which cannot be used for sensing and if this threshold is reached, the communication purposes preempt the sensing service if there are further communication attempts, especially except for user equipments with a sufficient sensing priority.

It is thereby advantageously possible to realize and implement the inventive method in a comparatively simple and efficient manner.

Furthermore, the present invention relates to a user equipment for being used for requesting and/or initiating a wireless sensing service operation provided by a mobile communication network, to which the user equipment is connected either via a radio access network of the mobile communication network, or via a further radio access network of another mobile communication network, wherein the user equipment is configured to communicate with a sensing function of the mobile communication network and/or of the radio access network and/or of the further radio access network,
wherein, in order to handle or conduct the requested wireless sensing service operation, the user equipment is configured such that:
-- the user equipment transmits an sensing request message, wherein by means of the sensing request message, the user equipment requests to be provided with the requested wireless sensing service operation,
-- the user equipment receives a sensing response message responding to the sensing request message, the sensing response message indicating an offered wireless sensing service operation that is able to be provided by the mobile communication network, wherein the offered wireless sensing service operation differs from the requested wireless sensing service operation,
-- the user equipment transmits an sensing request confirmation message, wherein by means of the sensing request confirmation message, the user equipment confirms to be provided with sensing services according to the offered wireless sensing service operation.

Furthermore, the present invention relates to a system or to a telecommunications network for using a user equipment for requesting and/or initiating a wireless sensing service operation provided by a mobile communication network, the mobile communication network comprising or having a core network and the user equipment being connected to the mobile communication network either via a radio access network of the mobile communication network, or via a further radio access network of another mobile communication network, wherein the mobile communication network and/or the radio access network and/or the further radio access network comprises a sensing function,
wherein, in order to handle or conduct the requested wireless sensing service operation, the system or mobile communication network is configured such that:
-- the user equipment transmits an sensing request message, wherein by means of the sensing request message, the user equipment requests to be provided with the requested wireless sensing service operation,
-- the user equipment receives a sensing response message responding to the sensing request message, the sensing response message indicating an offered wireless sensing service operation that is able to be provided by the mobile communication network, wherein the offered wireless sensing service operation differs from the requested wireless sensing service operation,
-- the user equipment transmits an sensing request confirmation message, wherein by means of the sensing request confirmation message, the user equipment confirms to be provided with sensing services according to the offered wireless sensing service operation.

Additionally, the present invention relates to a program comprising a computer readable program code which, when executed on a computer and/or on a user equipment and/or on a network node of a mobile communication network and/or on an access and mobility management function and/or on a sensing function and/or in part on a network node of a mobile communication network and/or in part on a access and mobility management function and/or in part on a sensing function, causes the computer and/or the user equipment and/or the network node of the mobile communication network and/or the access and mobility management function and/or the sensing function to perform the inventive method.

Additionally, the present invention relates to a computer-readable medium comprising instructions which when executed on a computer and/or on a user equipment and/or on a network node of a mobile communication network and/or on an access and mobility management function and/or on a sensing function and/or in part on a network node of a mobile communication network and/or in part on a access and mobility management function and/or in part on a sensing function, causes the computer and/or the user equipment and/or the network node of the mobile communication network and/or the access and mobility management function and/or the sensing function to perform the inventive method.

These and other characteristics, features and advantages of the present invention will become apparent from the following detailed description, taken in conjunction with the accompanying drawings, which illustrate, by way of example, the principles of the invention. The description is given for the sake of example only, without limiting the scope of the invention. The reference figures quoted below refer to the attached drawings.

### BRIEF DESCRIPTION OF THE DRAWINGS

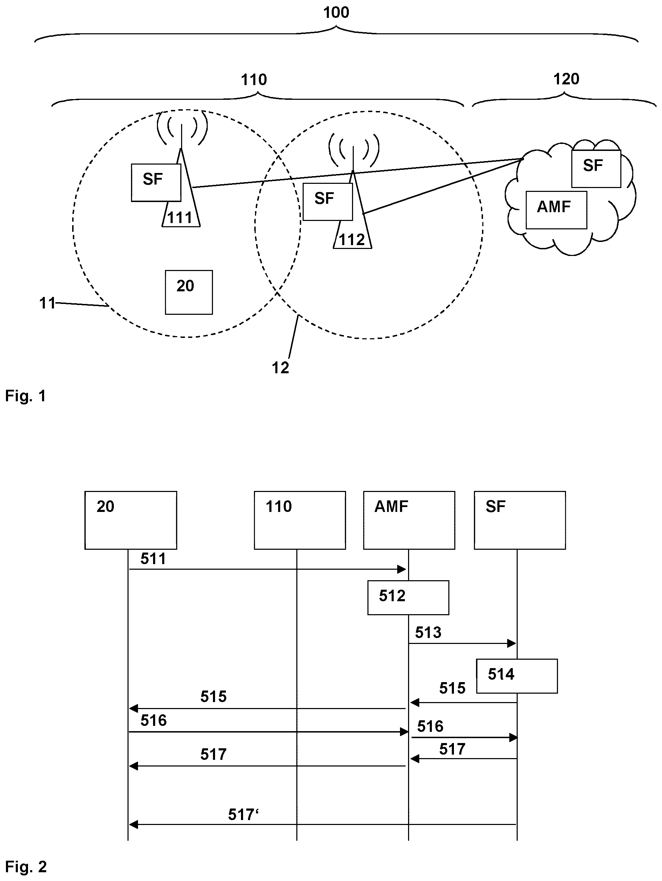

Figure 1 schematically illustrates a telecommunications network or mobile communication network, comprising an access network and a core network, a user equipment being served by the mobile communication network, wherein an integrated sensing and communication service is able to be provided by the mobile communication network, especially by means of at least one sensing function and/or by means of a plurality of sensing functions and wherein the core network comprises a plurality of network functions or services, especially an access and mobility management function.
Figure 2 schematically illustrates a communication diagram between the user equipment and the network nodes and entities involved in providing the integrated sensing and communication service of the mobile communication network, wherein the access and mobility management function is involved in deciding which one of the plurality of sensing function entities or functionalities of the mobile communication network is used.

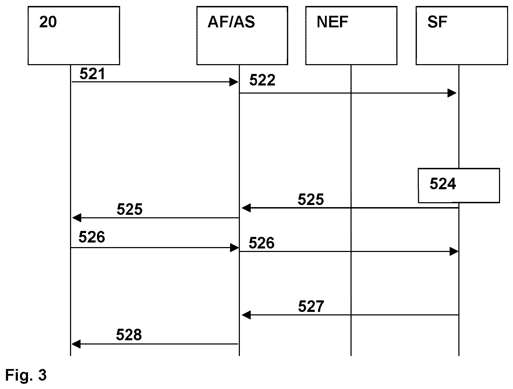

Figure 3 schematically illustrates a communication diagram between the user equipment and the network nodes and entities involved in providing the integrated sensing and communication service of the mobile communication network, wherein an application function or application server, especially with a network exposure function is involved in deciding which one of the plurality of sensing function entities or functionalities of the mobile communication network is used.

### DETAILED DESCRIPTION

The present invention will be described with respect to particular embodiments and with reference to certain drawings, but the invention is not limited thereto but only by the claims. The drawings described are only schematic and are nonlimiting. In the drawings, the size of some of the elements may be exaggerated and not drawn on scale for illustrative purposes.

Where an indefinite or definite article is used when referring to a singular noun, e.g. "a", "an", "the", this includes a plural of that noun unless something else is specifically stated.

Furthermore, the terms first, second, third and the like in the description and in the claims are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

In Figure 1, a telecommunications network 100 (typically a mobile communication network 100), comprising an access network 110 and a core network 120, and a user equipment 20 is schematically shown.
A user equipment 20 is served by the mobile communication network 100, wherein an integrated sensing and communication service is able to be provided by the mobile communication network 100 - at least in certain geographical areas covered by the mobile communication network 100. In such geographical areas where integrated sensing and communication services are able to be provided, the mobile communication network 100 typically comprises a sensing function SF (but preferably a plurality of sensing functions SF). The sensing functions SF are typically located in the radio access network 110 (i.e. typically collocated with network nodes of the radio access network 110 or near such network nodes) and/or in the core network 120 (i.e. typically collocated with network nodes of the core network 120 or near such network nodes), i.e. sensing function SF functionalities are able to be located solely in or at the radio access network 110 or in or at the core network 120 or in or at both the radio access network 110 and the core network 120; for example, it could be the case that some policies are only available in the core network (e.g. for specific exposure prevention and/or for combining other results from other base station entities or radio access network nodes or from other sources). Especially in the radio access network 110, there could be some modification of the raw data received as measurements, called sensing data; this data are able to be sent towards the core network 120 for further calculations. The core network 120 typically comprises a plurality of network functions or services, especially an access and mobility management function AMF. In the context of the present invention, especially the network functions or services according to 5G terminology are used; however, there might be network functions or services in 6G that provide a corresponding or similar functionality and/or responsibility, albeit named differently.

The telecommunications network 100 is especially realized as mobile (cellular) communication network 100. The telecommunications network 100, especially its core network 120, typically comprises a number of network functions or services that are, however and for the sake of simplification, (and except the access and mobility management function) not explicitly and separately indicated, in Figure 1, by means of reference signs. The access network 110 of the telecommunications network 100 exemplarily comprises a plurality of radio cells 11, 12. In the exemplary situation or scenario shown in Figure 1, a first base station entity 111 generates or is associated with or spans the first radio cell 11, and a second base station entity 112 generates or is associated with or spans the second radio cell 12. In the exemplary situation shown in Figure 1, the user equipment 20 (if connected to or with the mobile communication network 100) is connected, via a radio interface or air interface, to the first base station entity 111 of the access network 110 of the mobile communication network 100.

According to the present invention, the user equipment 20 is typically, but not necessarily, mobile - i.e. able to move - with respect to the - typically, but not necessarily, static - radio cells 11, 12 or corresponding base station entities 111, 112 of the access network 110.
Especially, the user equipment 20 might comprise an application (not specifically depicted in Figure 1) as part of the user equipment 20; the application typically runs on the user equipment 20, i.e. the user equipment 20 typically runs or executes an operating system (such as a mobile (devices) operating system, e.g., android, iOS, iPadOS, etc.), and the application is running on the operating system; alternatively, the application might also be a lower level application not running on or as part of the operating system but as part of, e.g., the subscriber identity module of the user equipment 20.

In Figure 2, a communication diagram between the user equipment 20 and the network nodes and entities involved in providing the integrated sensing and communication service of the mobile communication network 100 is schematically shown. The access and mobility management function AMF is involved in deciding which one of the plurality of sensing function entities or functionalities SF of the mobile communication network 100 is used.

Thus, it is thereby advantageously possible that the user equipment 20 has a mechanism to request a sensing (integrated sensing and communication) service and provide the information about the needed parameters of that service. Figure 2 shows an embodiment where the user equipment 20 - in order to realize such a communication to request a sensing (integrated sensing and communication) service and provide the information about the needed parameters of that service - communicates directly via the network layer (i.e. the sensing service is requested via the 5G core network 120); this also involves the possibility for a mechanism to negotiate the sensing service quality.

If the user equipment 20 is in connected mode idle state (CM idle state), it initiates the service request procedure in order to send uplink signaling messages, user data, to request emergency services fallback, or as a response to a network paging request (cf. TS 23.502, clause 4.2.3.2).
In a first processing step 511, the user equipment 20 sends (especially using UL NAS TRANSPORT - i.e. an existing container message) a request regarding a sensing function or regarding an integrated sensing and communication service (in the context of the present invention called sensing request message, or SF request or ISACF request) towards the access and mobility management function AMF. It passes via the radio access network 110 (i.e. using the air interface of the user equipment 20; however, typically, the radio access network 110 is not involved (besides transparently forwarding) in this communication) where the interface towards the access and mobility management function AMF is able to be service based. The sensing request message preferably and especially contains one or a plurality out of the following: the user equipment location, the (or a) user equipment identifier, the radius in meters around the user equipment 20 for which detection of obstacles/vehicles is required, an information about the user equipment sensing capability, and typically and preferably also an information or indication regarding the duration of the requested sensing service, as well as an information or indication regarding the requested sensing performance (quality): e.g., accuracy of detected objects positioning estimate, accuracy of velocity estimate of detected objects, resolution, latency, sensing refresh rate.

In a second processing step 512, the access and mobility management function AMF selects a corresponding sensing function SF, i.e. it makes SF (or ISACF) selection based on the parameters sent in the sensing request message from the user equipment 20 (i.e. in the SF request); such parameters especially (and inter alia) comprise the target sensing service area (typically but not necessarily corresponding to the user equipment location and a radius around the user equipment 20) and/or the requested wireless sensing performance. The access and mobility management function AMF may be configured to route requests coming from specific geographical locations (based on the user equipment location) to specific sensing functions, SF, (or integrated sensing and communication functions, ISACF). In order to select the correct sensing function SF, the access and mobility management function AMF might be configured to retrieve from the unified data management, UDM, sensing function (or integrated sensing and communication function) subscriber data of the user equipment 20 (SF (or ISACF) subscriber data), typically based on the user equipment identity and/or category. Especially, the access and mobility management function AMF may be configured with a mapping table of user equipment identity and SF (or ISACF) address and/or of the user equipment location.

In a third processing step 513, the access and mobility management function AMF especially uses a service-based interface (of the sensing function) and requests (especially by means of an additional sensing request message, i.e. related to the sensing request message of the user equipment 20 but typically not (at least not necessarily) identical thereto) service operation towards the sensing function SF (or ISACF). Such an additional sensing request message especially includes an SF correlation identifier, the access and mobility management function identity, the serving cell identity, the user equipment sensing capability, accuracy of detected objects positioning estimate, accuracy of velocity estimate of detected objects, resolution, latency, sensing refresh rate.

In a fourth processing step 514, the sensing function SF (or integrated sensing and communication function ISACF) checks for existing sensing operations in the requested target sensing service area.
If there is an ongoing sensing service (operation) in that (considered) area (i.e. the requested geographical area) with the requested performance, a respective answer message, or sensing response message, is transmitted in a fifth processing step 515. If there is lack of ongoing sensing service (to detect objects and their motion) in the requested area, the sensing function SF (or integrated sensing and communication function ISACF) starts the sensing operation, e.g. it determines the sensing transmitter(s) and sensing receiver(s) for sensing operation; checks if there are specific constrains in that area (e.g. restricted areas for ISAC operation, sensing transmitter and sensing receiver with needed capabilities); configures the sensing transmitter(s) and sensing receiver(s).
In order to efficiently realize the wireless sensing service operation, according to the present invention, especially the following setup or implementation is proposed regarding different configurations of base station entities in view of sensing: Especially, it is proposed to provide three different such types of base station configurations for sensing: According to a first type of such configuration, the base stations are configured to have priority for communication and sensing capability is only working when there are free resources (i.e. not used for communication purposes); according to a second type of such configuration, the base stations are configured to have a certain static percentage reserved for communication and a certain percentage reserved for sensing and when that threshold is reached to stop further attempts for communication and/or for sensing; according to a third type of such configuration, the base stations are configured to have a specific percentage for communication which cannot be used for sensing and if this threshold is reached, communication purposes will preempt sensing service if there are further communication attempts. Preferably, based on the network operator's preference, the base stations are configured via operations and maintenance, OAM, in one of these types of configuration.
Hence, based on the current communication load, respectively, of the such configured base stations and user equipments concerning the target sensing service area, the sensing function SF checks - as part of the fourth processing step 514 - what sensing service quality can be achieved. Especially additionally, the sensing function SF checks if the considered user equipment 20 is allowed to request (the requested) service quality A.

In the fifth processing step 515, the sensing function SF responds - by means of the sensing response message - to the user equipment 20, i.e. the user equipment 20 receives the sensing response message, (especially by means or via the access and mobility management function, AMF) if the (requested) service quality A can be provided or only (e.g. a lesser) service quality B (for example, a different radius of the sensing service area and/or a different sensing resolution). Hence, by means of the sensing response message, an offered wireless sensing service operation (offered by the sensing function SF) is transmitted to (and received by) the user equipment 20. Of course, in case that the requested (sensing) service quality ("service quality A") is able to be offered, then the offered wireless sensing service operation corresponds to the requested wireless sensing service operation; otherwise, the offered (sensing) service quality ("service quality B") differs from what has been requested by means or sensing request message.

According to the present invention, the user equipment 20 confirms - in a sixth processing step 516 - the need for the sensing service with the offered service quality; this is done by means of the user equipment 20 transmitting a sensing request confirmation message (ultimately) to the sensing function SF.
Subsequently, the sensing function SF starts collecting the sensing data/sensing results from sensing transmitter(s) and sensing receiver(s), if applicable makes additional calculations and starts the sensing service.

In a seventh processing step 517, 517', the sensing function SF (or integrated sensing and communication function, ISACF) starts sending sensing results towards the user equipment 20, e.g., using one or a plurality of DL NAS TRANSPORT messages or initiating a network triggered service request (e.g. via UPF, SMF, AMF as in TS23.502 clause 4.2.3.3) to transfer the sensing result for the requested time period.
The transfer of sensing results typically requires a certain level quality-of-service QoS that is, thus, needed - e.g. 40 kbps - to constantly transfer the detected sensing results (objects and their motion) in the target sensing service area for the requested duration of the sensing service. If the requested time duration of the service is not given (i.e. is not part of the sensing request message), it is especially preferred, according to the present invention, that there is a configurable timer started in the sensing function SF for which to report sensing results. After finishing the requested time duration or configurable default timer, the sensing function SF especially sends a notification towards the user equipment 20 for ending the timer and stopping of the sensing service.

In Figure 3, a communication diagram between the user equipment 20 and the network nodes and entities involved in providing the integrated sensing and communication service of the mobile communication network 100 is schematically shown. An application function or application server, AF/AS, especially with a network exposure function NEF is involved in deciding which one of the plurality of sensing function entities or functionalities of the mobile communication network is used.

Thus, it is thereby advantageously possible that the user equipment 20 has a mechanism to request a sensing (integrated sensing and communication) service and provide the information about the needed parameters of that service. Figure 3 shows an embodiment where the user equipment 20 - in order to realize such a communication to request a sensing (integrated sensing and communication) service and provide the information about the needed parameters of that service - communicates via an application function or application server, AF/AS; this also involves the possibility for a mechanism to negotiate the sensing service quality. Hence, the user equipment 20 is requesting the sensing service via a user equipment application client. For example, in case that the user equipment 20 is located inside (or in connection to or related to) a car, a possible implementation or embodiment according to the present invention is that the car application uses the user equipment 20 to directly request the sensing service - i.e. the user equipment 20 contacting AMF/SF (i.e. what has been mentioned above), or the sensing capability enabler client contacting the sensing capability enabler server (mentioned above); alternatively thereto, the application in the car asks the application server (application specific layer outside of scope of 3GPP) and the AS/AF requests the sensing service on behalf of the user equipment 20 via NEF to SF.

In a first processing step 521, the user equipment 20 communicates with the application server AF/AS on the application layer (outside of scope of 3GPP) on the required service for detecting objects and their motion, i.e. the sensing request message. The application server AS or application function AF contacts the network exposure function NEF to request sensing service from 5G core network.

In a second processing step 522, the application server AS or application function AF sends the sensing function request (or integrated sensing and communication function request - i.e. the sensing request message) towards the sensing function SF (or integrated sensing and communication function) via the network exposure function NEF. The sensing request message contains preferably and especially contains one or a plurality out of the following: the user equipment location, the (or a) user equipment identifier, the radius in meters around the user equipment 20 for which detection of obstacles/vehicles is required, an information about the user equipment sensing capability, and typically and preferably also an information or indication regarding the duration of the requested sensing service, as well as an information or indication regarding the requested sensing performance (quality): e.g., accuracy of detected objects positioning estimate, accuracy of velocity estimate of detected objects, resolution, latency, sensing refresh rate.

In a third processing step 524, the respective initial or contacted sensing function SF (or other SF') checks for existing sensing operations in the requested target sensing service area.
If there is an ongoing sensing service (operation) in that (considered) area (i.e. the requested geographical area) with the requested performance, a respective answer message, or sensing response message, is transmitted in a fourth processing step 525.
If there is lack of ongoing sensing service (to detect objects and their motion) in the requested area, the sensing function SF (or integrated sensing and communication function ISACF) - or other sensing function SF' - starts the sensing operation, e.g. it determines the sensing transmitter(s) and sensing receiver(s) for sensing operation; checks if there are specific constrains in that area (e.g. restricted areas for ISAC operation, sensing transmitter and sensing receiver with needed capabilities); configures the sensing transmitter(s) and sensing receiver(s).
In order to efficiently realize the wireless sensing service operation, according to the present invention, especially the following setup or implementation is proposed regarding different configurations of base station entities in view of sensing: Especially, it is proposed to provide three different such types of base station configurations for sensing: According to a first type of such configuration, the base stations are configured to have priority for communication and sensing capability is only working when there are free resources (i.e. not used for communication purposes); according to a second type of such configuration, the base stations are configured to have a certain static percentage reserved for communication and a certain percentage reserved for sensing and when that threshold is reached to stop further attempts for communication and/or for sensing; according to a third type of such configuration, the base stations are configured to have a specific percentage for communication which cannot be used for sensing and if this threshold is reached, communication purposes will preempt sensing service if there are further communication attempts. Preferably, based on the network operator's preference, the base stations are configured via operations and maintenance, OAM, in one of these types of configuration.
Hence, based on the current communication load, respectively, of the such configured base stations and user equipments concerning the target sensing service area, the sensing function SF checks - as part of the third processing step 524 - what sensing service quality can be achieved. Especially additionally, the sensing function SF checks if the application server AS or application function AF is allowed to request (the requested) service quality A.

In the fourth processing step 525, the sensing function SF responds - by means of the sensing response message - to the application server AS or application function AF (alternatively or cumulatively also to the user equipment 20), i.e. the application server AS or application function AF and/or the user equipment 20 receives the sensing response message, if the (requested) service quality A can be provided or only (e.g. a lesser) service quality B (for example, a different radius of the sensing service area and/or a different sensing resolution). Hence, by means of the sensing response message, an offered wireless sensing service operation (offered by the sensing function SF) is transmitted to (and received by) the application server AS or application function AF and/or the user equipment 20. Of course, in case that the requested (sensing) service quality ("service quality A") is able to be offered, then the offered wireless sensing service operation corresponds to the requested wireless sensing service operation; otherwise, the offered (sensing) service quality ("service quality B") differs from what has been requested by means or sensing request message.

According to the present invention, the application server AS or application function AF and/or the user equipment 20 confirms - in a fifth processing step 526 - the need for the sensing service with the offered service quality; this is done by means of the application server AS or application function AF and/or the user equipment 20 transmitting a sensing request confirmation message (ultimately) to the sensing function SF.
Subsequently, the sensing function SF starts collecting the sensing data/sensing results from sensing transmitter(s) and sensing receiver(s), if applicable makes additional calculations and starts the sensing service.

In a sixth processing step 527, the sensing function SF (or integrated sensing and communication function, ISACF) starts sending sensing results towards the application server AS or application function AF and/or towards the user equipment 20, e.g., using the UPF/N6 interface (or reference point) to transfer the sensing result for the requested time period.
The transfer of sensing results typically requires a certain level quality-of-service QoS that is, thus, needed - e.g. 40 kbps - to constantly transfer the detected sensing results (objects and their motion) in the target sensing service area for the requested duration of the sensing service. If the requested time duration of the service is not given (i.e. is not part of the sensing request message), it is especially preferred, according to the present invention, that there is a configurable timer started in the sensing function SF for which to report sensing results. After finishing the requested time duration or configurable default timer, the sensing function SF especially sends a notification towards the application server AS or application function AF and/or the user equipment 20 for ending the timer and stopping of the sensing service.

In an seventh processing step 528, the application server AS or application function AF sends via application layer the sensing results towards the user equipment 20.

## Claims

1. Method for using a user equipment (20) for requesting and/or initiating a wireless sensing service operation provided by a mobile communication network (100), the mobile communication network (100) comprising or having a core network (120) and the user equipment (20) being connected to the mobile communication network (100) either via a radio access network (110) of the mobile communication network (100), or via a further radio access network of another mobile communication network, wherein the mobile communication network (100) and/or the radio access network (110) and/or the further radio access network comprises a sensing function,SF,
wherein, in order to handle or conduct the requested wireless sensing service operation, the method comprises the following steps:
-- in a first step, the user equipment (20) transmits a sensing request message, wherein by means of the sensing request message, the user equipment (20) requests to be provided with the requested wireless sensing service operation,
-- in a second step, the user equipment (20) receives a sensing response message responding to the sensing request message, the sensing response message indicating an offered wireless sensing service operation that is able to be provided by the mobile communication network (100), wherein the offered wireless sensing service operation differs from the requested wireless sensing service operation,
-- in a third step, the user equipment (20) transmits a sensing request confirmation message, wherein by means of the sensing request confirmation message, the user equipment (20) confirms to be provided with sensing services according to the offered wireless sensing service operation.

2. Method according to claim 1, wherein the sensing request message comprises one or a plurality of indications or pieces of information out of the following:
-- a location information of the user equipment (20) or an indication thereof,
-- a identifier information of the user equipment (20) or an indication thereof,
-- a sensing area information or an indication thereof, the sensing area information especially being relative to the location of the user equipment (20) and especially indicates a radius in meters around the user equipment (20) for which sensing and/or detection of obstacles is required or requested,
-- a sensing capability information of the user equipment or an indication thereof,
-- a duration information or an indication thereof of the requested wireless sensing service operation,
-- a sensing performance information or an indication thereof, especially regarding the quality of the requested wireless sensing service operation, especially related to one of the following: the accuracy of detected objects' positioning estimates, the accuracy of velocity estimates of detected objects, the spatial resolution, the latency and the sensing refresh rate.

3. Method according to one of the preceding claims, wherein, especially subsequent to the first step, if the user equipment (20) has specific sensing priority in the mobile communication network database, especially in the unified data management, UDM, or as a configured user equipment policy in the policy control function, PCF, the mobile communication network (100) confirms the requested wireless sensing service.

4. Method according to one of the preceding claims, wherein, especially subsequent to the second step, the user equipment (20) receives a further sensing response message, the further sensing response message indicating a further offered wireless sensing service operation that is able to be provided by the mobile communication network (100), wherein the further offered wireless sensing service operation differs from the offered wireless sensing service operation.

5. Method according to one of the preceding claims, wherein, especially subsequent to the third step, if the user equipment has a sufficient priority in the mobile communication network database, especially in the unified data management, UDM, or as a configured user equipment policy in the policy control function, PCF, the mobile communication network (100) cannot change, or offer a further change or modification, in the wireless sensing service operation that has already been confirmed by the user equipment (20) and is able to be provided by the mobile communication network (100).

6. Method according to one of the preceding claims, wherein, especially subsequent to the third step, if the user equipment does not have a sufficient priority in the mobile communication network database, especially in the unified data management, UDM, or as a configured user equipment policy in the policy control function, PCF, the mobile communication network (100) can change, or offer a further change or modification, in the wireless sensing service operation that has already been confirmed by the user equipment (20).

7. Method according to one of the preceding claims, wherein, the priority information of the user equipment is stored in the memory of the user equipment or in the USIM of the user equipment and is indicated to the mobile communication network in the sensing request.

8. Method according to one of the preceding claims, wherein the sensing response message and/or the further sensing response message is initiated by the sensing function, SF, and transmitted to the user equipment (20) and/or to an application function or application server ,AF/AS,
wherein especially, if the sensing request message does not comprise a duration information or an indication thereof of the requested wireless sensing service operation, a timer is started in the sensing function ,SF, for which to report the sensing results, wherein after expiry of the requested time duration or configurable default timer, the sensing function ,SF, transmits a notification to the user equipment (20) and/or to the application function or application server ,AF/AS, for ending the timer and stopping the requested wireless sensing service operation.

9. Method according to one of the preceding claims, wherein the mobile communication network (100) comprises an access and mobility management function, AMF, wherein the sensing request message and/or the sensing request confirmation message is transmitted using a non-access stratum message, especially an UL NAS TRANSPORT message, wherein especially the interface of the access and mobility management function, AMF, is a service-based architecture,
wherein especially, the sensing response message and/or the further sensing response message is transmitted using a non-access stratum message, especially an DL NAS TRANSPORT message or initiating a network triggered service request to transfer the sensing result for the requested time period.

10. Method according to one of the preceding claims, wherein the sensing function, SF, checks for existing sensing operations in the target sensing service area of the requested wireless sensing service operation, wherein
-- in case of existing sensing operations in the target sensing service area of the requested wireless sensing service operation, the sensing function, SF, starts sending sensing results towards the user equipment (20) or the application function or application server ,AF/AS, and
-- in case of a lack of existing sensing operations in the target sensing service area of the requested wireless sensing service operation, the sensing function, SF, - prior to sending sensing results towards the user equipment (20) or the application function or application server, AF/AS, - starts sensing operation, especially by means of at least one out of the following:
-- the sensing function, SF, determines the sensing transmitters and/or sensing receivers and/or their capabilities for the requested wireless sensing service operation
-- the sensing function, SF, checks if there are specific constraints in the respective area, especially regarding restrictions regarding sensing operation and/or the sensing transmitters and/or sensing receivers having the required capabilities,
-- the sensing function, SF, configures the sensing transmitters and/or sensing receivers.

11. Method according to one of the preceding claims, wherein the sensing function, SF, is or corresponds to an integrated sensing and communication function, ISACF,
wherein especially there are at least three types of base stations configurations for sensing, namely:
-- the sensing function, especially located in base stations, is configured to have priority for communication and sensing capability is only working when there are free resources from communication;
-- the sensing function, especially located in base stations, is configured to have a certain static percentage reserved for communication and certain percentage reserved for sensing, wherein in case that this threshold is reached, to stop further attempts for communication or for sensing;
-- the sensing function, especially located in base stations, is configured to have specific percentage for communication which cannot be used for sensing and if this threshold is reached, the communication purposes preempt the sensing service if there are further communication attempts, especially except for user equipments with a sufficient sensing priority.

12. User equipment (20) for being used for requesting and/or initiating a wireless sensing service operation provided by a mobile communication network (100), to which the user equipment (20) is connected either via a radio access network (110) of the mobile communication network (100), or via a further radio access network of another mobile communication network, wherein the user equipment (20) is configured to communicate with a sensing function, SF, of the mobile communication network (100) and/or of the radio access network (110) and/or of the further radio access network,
wherein, in order to handle or conduct the requested wireless sensing service operation, the user equipment (20) is configured such that:
-- the user equipment (20) transmits a sensing request message, wherein by means of the sensing request message, the user equipment (20) requests to be provided with the requested wireless sensing service operation,
-- the user equipment (20) receives a sensing response message responding to the sensing request message, the sensing response message indicating an offered wireless sensing service operation that is able to be provided by the mobile communication network (100), wherein the offered wireless sensing service operation differs from the requested wireless sensing service operation,
-- the user equipment (20) transmits a sensing request confirmation message, wherein by means of the sensing request confirmation message, the user equipment (20) confirms to be provided with sensing services according to the offered wireless sensing service operation.

13. System or mobile communication network (100) for using a user equipment (20) for requesting and/or initiating a wireless sensing service operation provided by a mobile communication network (100), the mobile communication network (100) comprising or having a core network (120) and the user equipment (20) being connected to the mobile communication network (100) either via a radio access network (110) of the mobile communication network (100), or via a further radio access network of another mobile communication network, wherein the mobile communication network (100) and/or the radio access network (110) and/or the further radio access network comprises a sensing function, SF,
wherein, in order to handle or conduct the requested wireless sensing service operation, the system or mobile communication network (100) is configured such that:
-- the user equipment (20) transmits a sensing request message, wherein by means of the sensing request message, the user equipment (20) requests to be provided with the requested wireless sensing service operation,
-- the user equipment (20) receives a sensing response message responding to the sensing request message, the sensing response message indicating an offered wireless sensing service operation that is able to be provided by the mobile communication network (100), wherein the offered wireless sensing service operation differs from the requested wireless sensing service operation,
-- the user equipment (20) transmits a sensing request confirmation message, wherein by means of the sensing request confirmation message, the user equipment (20) confirms to be provided with sensing services according to the offered wireless sensing service operation.

14. Program comprising a computer readable program code which, when executed on a computer and/or on a user equipment (20) and/or on a network node of a mobile communication network (100) and/or on an access and mobility management function ,AMF, and/or on a sensing function, SF, and/or in part on a network node of a mobile communication network (100) and/or in part on a access and mobility management function, AMF, and/or in part on a sensing function, SF, causes the computer and/or the user equipment (20) and/or the network node of the mobile communication network (100) and/or the access and mobility management function, AMF, and/or the sensing function, SF, to perform a method according one of claims 1 to 11.

15. Computer-readable medium comprising instructions which when executed on a computer and/or on a user equipment (20) and/or on a network node of a mobile communication network (100) and/or on an access and mobility management function, AMF, and/or on a sensing function, SF, and/or in part on a network node of a mobile communication network (100) and/or in part on a access and mobility management function, AMF, and/or in part on a sensing function, SF, causes the computer and/or the user equipment (20) and/or the network node of the mobile communication network (100) and/or the access and mobility management function, AMF, and/or the sensing function, SF, to perform a method according to one of claims 1 to 11.

## Patentansprüche

1. Verfahren zur Verwendung eines Benutzergeräts (20) zum Anfordern und/oder Initiieren eines drahtlosen Sensing-Dienstbetriebs, der von einem Mobilfunknetz (100) bereitgestellt wird, wobei das Mobilfunknetz (100) ein Kernnetz (120) umfasst oder aufweist und das Benutzergerät (20) mit dem Mobilfunknetz (100) entweder über ein Funkzugangsnetz (110) des Mobilfunknetzes (100) oder über ein weiteres Funkzugangsnetz eines anderen Mobilfunknetzes verbunden ist, wobei das Mobilfunknetz (100) und/oder das Funkzugangsnetz (110) und/oder das weitere Funkzugangsnetz eine Sensing-Funktion, SF, umfasst,
wobei das Verfahren, um den angeforderten drahtlosen Sensing-Dienstbetrieb zu handhaben oder durchzuführen, die folgenden Schritte umfasst:
-- in einem ersten Schritt überträgt das Benutzergerät (20) eine Sensing-Anforderungsnachricht, wobei das Benutzergerät (20) mittels der Sensing-Anforderungsnachricht anfordert, mit dem angeforderten drahtlosen Sensing-Dienstbetrieb versorgt zu werden,
-- in einem zweiten Schritt empfängt das Benutzergerät (20) eine Sensing-Antwortnachricht, die auf die Sensing-Anforderungsnachricht antwortet, wobei die Sensing-Antwortnachricht einen angebotenen drahtlosen Sensing-Dienstbetrieb anzeigt, der vom Mobilfunknetz (100) bereitgestellt werden kann, wobei sich der angebotene drahtlose Sensing-Dienstbetrieb vom angeforderten drahtlosen Sensing-Dienstbetrieb unterscheidet,
-- in einem dritten Schritt überträgt das Benutzergerät (20) eine Sensing-Anforderungsbestätigungsnachricht, wobei das Benutzergerät (20) mittels der Sensing-Anforderungsbestätigungsnachricht bestätigt, mit Sensing-Diensten gemäß dem angebotenen drahtlosen Sensing-Dienstbetrieb versorgt zu werden.

2. Verfahren nach Anspruch 1, wobei die Sensing-Anforderungsnachricht eine oder mehrere Angaben oder Informationen aus den folgenden umfasst:
-- eine Standortinformation des Benutzergeräts (20) oder eine Angabe davon,
-- eine Kennung des Benutzergeräts (20) oder eine Angabe davon,
-- eine Sensing-Bereichsinformation oder eine Angabe davon, wobei die Sensing-Bereichsinformation insbesondere relativ zum Standort des Benutzergeräts (20) ist und insbesondere einen Radius in Metern um das Benutzergerät (20) angibt, für den Sensing und/oder Detektion von Hindernissen erforderlich oder angefordert ist,
-- eine Sensing-Fähigkeitsinformation des Benutzergeräts oder eine Angabe davon,
-- eine Dauerinformation oder eine Angabe davon des angeforderten drahtlosen Sensing-Dienstbetriebs,
-- eine Sensing-Leistungsinformation oder eine Angabe davon, insbesondere bezüglich der Qualität des angeforderten drahtlosen Sensing-Dienstbetriebs, insbesondere bezogen auf eines der folgenden: die Genauigkeit der Positionsschätzungen detektierter Objekte, die Genauigkeit der Geschwindigkeitsschätzungen detektierter Objekte, die räumliche Auflösung, die Latenz und die Sensing-Aktualisierungsrate.

3. Verfahren nach einem der vorhergehenden Ansprüche, wobei, insbesondere nachfolgend auf den ersten Schritt, falls das Benutzergerät (20) spezifische Sensing-Priorität in der Mobilfunknetz-Datenbank hat, insbesondere in der einheitlichen Datenverwaltung, UDM, oder als konfigurierte Benutzergeräterichtlinie in der Richtliniensteuerungsfunktion, PCF, das Mobilfunknetz (100) den angeforderten drahtlosen Sensing-Dienstbetrieb bestätigt.

4. Verfahren nach einem der vorhergehenden Ansprüche, wobei, insbesondere nachfolgend auf den zweiten Schritt, das Benutzergerät (20) eine weitere Sensing-Antwortnachricht empfängt, wobei die weitere Sensing-Antwortnachricht einen weiteren angebotenen drahtlosen Sensing-Dienstbetrieb anzeigt, der vom Mobilfunknetz (100) bereitgestellt werden kann, wobei sich der weitere angebotene drahtlose Sensing-Dienstbetrieb vom angebotenen drahtlosen Sensing-Dienstbetrieb unterscheidet.

5. Verfahren nach einem der vorhergehenden Ansprüche, wobei, insbesondere nachfolgend auf den dritten Schritt, falls das Benutzergerät ausreichende Priorität in der Mobilfunknetz-Datenbank hat, insbesondere in der einheitlichen Datenverwaltung, UDM, oder als konfigurierte Benutzergeräterichtlinie in der Richtliniensteuerungsfunktion, PCF, das Mobilfunknetz (100) den drahtlosen Sensing-Dienstbetrieb, der bereits vom Benutzergerät (20) bestätigt wurde und vom Mobilfunknetz (100) bereitgestellt werden kann, nicht ändern oder eine weitere Änderung oder Modifikation anbieten kann.

6. Verfahren nach einem der vorhergehenden Ansprüche, wobei, insbesondere nachfolgend auf den dritten Schritt, falls das Benutzergerät keine ausreichende Priorität in der Mobilfunknetz-Datenbank hat, insbesondere in der einheitlichen Datenverwaltung, UDM, oder als konfigurierte Benutzergeräterichtlinie in der Richtliniensteuerungsfunktion, PCF, das Mobilfunknetz (100) den drahtlosen Sensing-Dienstbetrieb, der bereits vom Benutzergerät (20) bestätigt wurde, ändern oder eine weitere Änderung oder Modifikation anbieten kann.

7. Verfahren nach einem der vorhergehenden Ansprüche, wobei die Prioritätsinformation des Benutzergeräts im Speicher des Benutzergeräts oder im USIM des Benutzergeräts gespeichert ist und dem Mobilfunknetz in der Sensing-Anforderungsnachricht angezeigt wird.

8. Verfahren nach einem der vorhergehenden Ansprüche, wobei die Sensing-Antwortnachricht und/oder die weitere Sensing-Antwortnachricht von der Sensing-Funktion, SF, initiiert und an das Benutzergerät (20) und/oder an eine Anwendungsfunktion oder einen Anwendungsserver, AF/AS, übertragen wird,
wobei insbesondere, falls die Sensing-Anforderungsnachricht keine Dauerinformation oder eine Angabe davon des angeforderten drahtlosen Sensing-Dienstbetriebs umfasst, ein Timer in der Sensing-Funktion, SF, gestartet wird, für den die Sensing-Ergebnisse zu berichten sind, wobei nach Ablauf der angeforderten Zeitdauer oder des konfigurierbaren Standard-Timers die Sensing-Funktion, SF, eine Benachrichtigung an das Benutzergerät (20) und/oder an die Anwendungsfunktion oder den Anwendungsserver, AF/AS, überträgt, um den Timer zu beenden und den angeforderten drahtlosen Sensing-Dienstbetrieb zu stoppen.

9. Verfahren nach einem der vorhergehenden Ansprüche, wobei das Mobilfunknetz (100) eine Zugangs- und Mobilitätsverwaltungsfunktion, AMF, umfasst, wobei die Sensing-Anforderungsnachricht und/oder die Sensing-Anforderungsbestätigungsnachricht unter Verwendung einer Nicht-Zugangsschicht-Nachricht, insbesondere einer UL NAS TRANSPORT-Nachricht, übertragen wird, wobei insbesondere die Schnittstelle der Zugangs- und Mobilitätsverwaltungsfunktion, AMF, eine dienstbasierte Architektur ist,
wobei insbesondere die Sensing-Antwortnachricht und/oder die weitere Sensing-Antwortnachricht unter Verwendung einer Nicht-Zugangsschicht-Nachricht, insbesondere einer DL NAS TRANSPORT-Nachricht, oder durch Initiieren einer netzwerkausgelösten Dienstanforderung übertragen wird, um das Sensing-Ergebnis für den angeforderten Zeitraum zu übertragen.

10. Verfahren nach einem der vorhergehenden Ansprüche, wobei die Sensing-Funktion, SF, auf bestehende Sensing-Operationen im Ziel-Sensing-Dienstbereich des angeforderten drahtlosen Sensing-Dienstbetriebs prüft, wobei
-- im Fall bestehender Sensing-Operationen im Ziel-Sensing-Dienstbereich des angeforderten drahtlosen Sensing-Dienstbetriebs, die Sensing-Funktion, SF, beginnt, Sensing-Ergebnisse an das Benutzergerät (20) oder die Anwendungsfunktion oder den Anwendungsserver, AF/AS, zu senden, und
-- im Fall eines Fehlens bestehender Sensing-Operationen im Ziel-Sensing-Dienstbereich des angeforderten drahtlosen Sensing-Dienstbetriebs, die Sensing-Funktion, SF, - vor dem Senden von Sensing-Ergebnissen an das Benutzergerät (20) oder die Anwendungsfunktion oder den Anwendungsserver, AF/AS, - Sensing-Operationen startet, insbesondere mittels mindestens eines der folgenden:
-- die Sensing-Funktion, SF, bestimmt die Sensing-Sender und/oder Sensing-Empfänger und/oder deren Fähigkeiten für den angeforderten drahtlosen Sensing-Dienstbetrieb
-- die Sensing-Funktion, SF, prüft, ob es spezifische Einschränkungen im jeweiligen Bereich gibt, insbesondere bezüglich Beschränkungen hinsichtlich Sensing-Operationen und/oder der Sensing-Sender und/oder Sensing-Empfänger, die die erforderlichen Fähigkeiten haben,
-- die Sensing-Funktion, SF, konfiguriert die Sensing-Sender und/oder Sensing-Empfänger.

11. Verfahren nach einem der vorhergehenden Ansprüche, wobei die Sensing-Funktion, SF, einer integrierten Sensing- und Kommunikationsfunktion, ISACF, entspricht oder diese ist, wobei es insbesondere mindestens drei Arten von Basisstations-Konfigurationen für Sensing gibt, nämlich:
-- die Sensing-Funktion, insbesondere in Basisstationen angeordnet, ist konfiguriert, Priorität für Kommunikation zu haben, und die Sensing-Fähigkeit funktioniert nur, wenn es freie Ressourcen von der Kommunikation gibt;
-- die Sensing-Funktion, insbesondere in Basisstationen angeordnet, ist konfiguriert, einen bestimmten statischen Prozentsatz für Kommunikation und einen bestimmten Prozentsatz für Sensing reserviert zu haben, wobei, falls dieser Schwellenwert erreicht ist, weitere Versuche für Kommunikation oder für Sensing zu stoppen sind;
-- die Sensing-Funktion, insbesondere in Basisstationen angeordnet, ist konfiguriert, einen spezifischen Prozentsatz für Kommunikation zu haben, der nicht für Sensing verwendet werden kann, und falls dieser Schwellenwert erreicht ist, die Kommunikationszwecke den Sensing-Dienst verdrängen, falls es weitere Kommunikationsversuche gibt, insbesondere außer für Benutzergeräte mit ausreichender Sensing-Priorität.

12. Benutzergerät (20) zur Verwendung zum Anfordern und/oder Initiieren eines drahtlosen Sensing-Dienstbetriebs, der von einem Mobilfunknetz (100) bereitgestellt wird, mit dem das Benutzergerät (20) entweder über ein Funkzugangsnetz (110) des Mobilfunknetzes (100) oder über ein weiteres Funkzugangsnetz eines anderen Mobilfunknetzes verbunden ist, wobei das Benutzergerät (20) konfiguriert ist, mit einer Sensing-Funktion, SF, des Mobilfunknetzes (100) und/oder des Funkzugangsnetzes (110) und/oder des weiteren Funkzugangsnetzes zu kommunizieren,
wobei das Benutzergerät (20), um den angeforderten drahtlosen Sensing-Dienstbetrieb zu handhaben oder durchzuführen, derart konfiguriert ist, dass:
-- das Benutzergerät (20) eine Sensing-Anforderungsnachricht überträgt, wobei das Benutzergerät (20) mittels der Sensing-Anforderungsnachricht anfordert, mit dem angeforderten drahtlosen Sensing-Dienstbetrieb versorgt zu werden,
-- das Benutzergerät (20) eine Sensing-Antwortnachricht empfängt, die auf die Sensing-Anforderungsnachricht antwortet, wobei die Sensing-Antwortnachricht einen angebotenen drahtlosen Sensing-Dienstbetrieb anzeigt, der vom Mobilfunknetz (100) bereitgestellt werden kann, wobei sich der angebotene drahtlose Sensing-Dienstbetrieb vom angeforderten drahtlosen Sensing-Dienstbetrieb unterscheidet,
-- das Benutzergerät (20) eine Sensing-Anforderungsbestätigungsnachricht überträgt, wobei das Benutzergerät (20) mittels der Sensing-Anforderungsbestätigungsnachricht bestätigt, mit Sensing-Diensten gemäß dem angebotenen drahtlosen Sensing-Dienstbetrieb versorgt zu werden.

13. System oder Mobilfunknetz (100) zur Verwendung eines Benutzergeräts (20) zum Anfordern und/oder Initiieren eines drahtlosen Sensing-Dienstbetriebs, der von einem Mobilfunknetz (100) bereitgestellt wird, wobei das Mobilfunknetz (100) ein Kernnetz (120) umfasst oder aufweist und das Benutzergerät (20) mit dem Mobilfunknetz (100) entweder über ein Funkzugangsnetz (110) des Mobilfunknetzes (100) oder über ein weiteres Funkzugangsnetz eines anderen Mobilfunknetzes verbunden ist, wobei das Mobilfunknetz (100) und/oder das Funkzugangsnetz (110) und/oder das weitere Funkzugangsnetz eine Sensing-Funktion, SF, umfasst,
wobei das System oder Mobilfunknetz (100), um den angeforderten drahtlosen Sensing-Dienstbetrieb zu handhaben oder durchzuführen, derart konfiguriert ist, dass:
-- das Benutzergerät (20) eine Sensing-Anforderungsnachricht überträgt, wobei das Benutzergerät (20) mittels der Sensing-Anforderungsnachricht anfordert, mit dem angeforderten drahtlosen Sensing-Dienstbetrieb versorgt zu werden,
-- das Benutzergerät (20) eine Sensing-Antwortnachricht empfängt, die auf die Sensing-Anforderungsnachricht antwortet, wobei die Sensing-Antwortnachricht einen angebotenen drahtlosen Sensing-Dienstbetrieb anzeigt, der vom Mobilfunknetz (100) bereitgestellt werden kann, wobei sich der angebotene drahtlose Sensing-Dienstbetrieb vom angeforderten drahtlosen Sensing-Dienstbetrieb unterscheidet,
-- das Benutzergerät (20) eine Sensing-Anforderungsbestätigungsnachricht überträgt, wobei das Benutzergerät (20) mittels der Sensing-Anforderungsbestätigungsnachricht bestätigt, mit Sensing-Diensten gemäß dem angebotenen drahtlosen Sensing-Dienstbetrieb versorgt zu werden.

14. Programm, umfassend einen computerlesbaren Programmcode, der, wenn er auf einem Computer und/oder auf einem Benutzergerät (20) und/oder auf einem Netzwerkknoten eines Mobilfunknetzes (100) und/oder auf einer Zugangs- und Mobilitätsverwaltungsfunktion, AMF, und/oder auf einer Sensing-Funktion, SF, und/oder teilweise auf einem Netzwerkknoten eines Mobilfunknetzes (100) und/oder teilweise auf einer Zugangs- und Mobilitätsverwaltungsfunktion, AMF, und/oder teilweise auf einer Sensing-Funktion, SF, ausgeführt wird, den Computer und/oder das Benutzergerät (20) und/oder den Netzwerkknoten des Mobilfunknetzes (100) und/oder die Zugangs- und Mobilitätsverwaltungsfunktion, AMF, und/oder die Sensing-Funktion, SF, veranlasst, ein Verfahren nach einem der Ansprüche 1 bis 11 auszuführen.

15. Computerlesbares Medium, umfassend Anweisungen, die, wenn sie auf einem Computer und/oder auf einem Benutzergerät (20) und/oder auf einem Netzwerkknoten eines Mobilfunknetzes (100) und/oder auf einer Zugangs- und Mobilitätsverwaltungsfunktion, AMF, und/oder auf einer Sensing-Funktion, SF, und/oder teilweise auf einem Netzwerkknoten eines Mobilfunknetzes (100) und/oder teilweise auf einer Zugangs- und Mobilitätsverwaltungsfunktion, AMF, und/oder teilweise auf einer Sensing-Funktion, SF, ausgeführt werden, den Computer und/oder das Benutzergerät (20) und/oder den Netzwerkknoten des Mobilfunknetzes (100) und/oder die Zugangs- und Mobilitätsverwaltungsfunktion, AMF, und/oder die Sensing-Funktion, SF, veranlassen, ein Verfahren nach einem der Ansprüche 1 bis 11 auszuführen.

## Revendications

1. Procédé pour utiliser un équipement utilisateur (20) pour demander et/ou initier une opération de service de détection sans fil fournie par un réseau de communication mobile (100), le réseau de communication mobile (100) comprenant ou ayant un réseau cœur (120) et l'équipement utilisateur (20) étant connecté au réseau de communication mobile (100) soit via un réseau d'accès radio (110) du réseau de communication mobile (100), soit via un autre réseau d'accès radio d'un autre réseau de communication mobile, dans lequel le réseau de communication mobile (100) et/ou le réseau d'accès radio (110) et/ou l'autre réseau d'accès radio comprend une fonction de détection, SF,
dans lequel, afin de gérer ou d'effectuer l'opération de service de détection sans fil demandée, le procédé comprend les étapes suivantes :
-- dans une première étape, l'équipement utilisateur (20) transmet un message de demande de détection, dans lequel au moyen du message de demande de détection, l'équipement utilisateur (20) demande à être fourni avec l'opération de service de détection sans fil demandée,
-- dans une deuxième étape, l'équipement utilisateur (20) reçoit un message de réponse de détection répondant au message de demande de détection, le message de réponse de détection indiquant une opération de service de détection sans fil offerte qui peut être fournie par le réseau de communication mobile (100), dans lequel l'opération de service de détection sans fil offerte diffère de l'opération de service de détection sans fil demandée,
-- dans une troisième étape, l'équipement utilisateur (20) transmet un message de confirmation de demande de détection, dans lequel au moyen du message de confirmation de demande de détection, l'équipement utilisateur (20) confirme être fourni avec des services de détection selon l'opération de service de détection sans fil offerte.

2. Procédé selon la revendication 1, dans lequel le message de demande de détection comprend une ou plusieurs indications ou informations parmi les suivantes :
-- une information de localisation de l'équipement utilisateur (20) ou une indication de celle-ci,
-- une information d'identification de l'équipement utilisateur (20) ou une indication de celle-ci,
-- une information de zone de détection ou une indication de celle-ci, l'information de zone de détection étant notamment relative à la localisation de l'équipement utilisateur (20) et indiquant notamment un rayon en mètres autour de l'équipement utilisateur (20) pour lequel la détection et/ou la détection d'obstacles est requise ou demandée,
-- une information de capacité de détection de l'équipement utilisateur ou une indication de celle-ci,
-- une information de durée ou une indication de celle-ci de l'opération de service de détection sans fil demandée,
-- une information de performance de détection ou une indication de celle-ci, notamment concernant la qualité de l'opération de service de détection sans fil demandée, notamment liée à l'un des éléments suivants : la précision des estimations de positionnement des objets détectés, la précision des estimations de vélocité des objets détectés, la résolution spatiale, la latence et le taux de rafraîchissement de détection.

3. Procédé selon l'une des revendications précédentes, dans lequel, notamment suite à la première étape, si l'équipement utilisateur (20) a une priorité de détection spécifique dans la base de données du réseau de communication mobile, notamment dans la gestion unifiée des données, UDM, ou en tant que politique d'équipement utilisateur configurée dans la fonction de contrôle de politique, PCF, le réseau de communication mobile (100) confirme l'opération de service de détection sans fil demandée.

4. Procédé selon l'une des revendications précédentes, dans lequel, notamment suite à la deuxième étape, l'équipement utilisateur (20) reçoit un autre message de réponse de détection, l'autre message de réponse de détection indiquant une autre opération de service de détection sans fil offerte qui peut être fournie par le réseau de communication mobile (100), dans lequel l'autre opération de service de détection sans fil offerte diffère de l'opération de service de détection sans fil offerte.

5. Procédé selon l'une des revendications précédentes, dans lequel, notamment suite à la troisième étape, si l'équipement utilisateur a une priorité suffisante dans la base de données du réseau de communication mobile, notamment dans la gestion unifiée des données, UDM, ou en tant que politique d'équipement utilisateur configurée dans la fonction de contrôle de politique, PCF, le réseau de communication mobile (100) ne peut pas modifier, ou offrir un autre changement ou modification, dans l'opération de service de détection sans fil qui a déjà été confirmée par l'équipement utilisateur (20) et peut être fournie par le réseau de communication mobile (100).

6. Procédé selon l'une des revendications précédentes, dans lequel, notamment suite à la troisième étape, si l'équipement utilisateur n'a pas une priorité suffisante dans la base de données du réseau de communication mobile, notamment dans la gestion unifiée des données, UDM, ou en tant que politique d'équipement utilisateur configurée dans la fonction de contrôle de politique, PCF, le réseau de communication mobile (100) peut modifier, ou offrir un autre changement ou modification, dans l'opération de service de détection sans fil qui a déjà été confirmée par l'équipement utilisateur (20).

7. Procédé selon l'une des revendications précédentes, dans lequel l'information de priorité de l'équipement utilisateur est stockée dans la mémoire de l'équipement utilisateur ou dans l'USIM de l'équipement utilisateur et est indiquée au réseau de communication mobile dans la demande de détection.

8. Procédé selon l'une des revendications précédentes, dans lequel le message de réponse de détection et/ou l'autre message de réponse de détection est initié par la fonction de détection, SF, et transmis à l'équipement utilisateur (20) et/ou à une fonction d'application ou un serveur d'application, AF/AS,
dans lequel notamment, si le message de demande de détection ne comprend pas d'information de durée ou une indication de celle-ci de l'opération de service de détection sans fil demandée, un temporisateur est démarré dans la fonction de détection, SF, pour lequel rapporter les résultats de détection, dans lequel après expiration de la durée demandée ou du temporisateur par défaut configurable, la fonction de détection, SF, transmet une notification à l'équipement utilisateur (20) et/ou à la fonction d'application ou au serveur d'application, AF/AS, pour terminer le temporisateur et arrêter l'opération de service de détection sans fil demandée.

9. Procédé selon l'une des revendications précédentes, dans lequel le réseau de communication mobile (100) comprend une fonction de gestion d'accès et de mobilité, AMF, dans lequel le message de demande de détection et/ou le message de confirmation de demande de détection est transmis en utilisant un message de strate sans accès, notamment un message UL NAS TRANSPORT, dans lequel notamment l'interface de la fonction de gestion d'accès et de mobilité, AMF, est une architecture basée sur les services,
dans lequel notamment, le message de réponse de détection et/ou l'autre message de réponse de détection est transmis en utilisant un message de strate sans accès, notamment un message DL NAS TRANSPORT ou en initiant une demande de service déclenchée par le réseau pour transférer le résultat de détection pour la période demandée.

10. Procédé selon l'une des revendications précédentes, dans lequel la fonction de détection, SF, vérifie l'existence d'opérations de détection dans la zone de service de détection cible de l'opération de service de détection sans fil demandée, dans lequel
-- en cas d'opérations de détection existantes dans la zone de service de détection cible de l'opération de service de détection sans fil demandée, la fonction de détection, SF, commence à envoyer des résultats de détection vers l'équipement utilisateur (20) ou la fonction d'application ou le serveur d'application, AF/AS, et
-- en cas d'absence d'opérations de détection existantes dans la zone de service de détection cible de l'opération de service de détection sans fil demandée, la fonction de détection, SF, - avant d'envoyer des résultats de détection vers l'équipement utilisateur (20) ou la fonction d'application ou le serveur d'application, AF/AS, - démarre l'opération de détection, notamment au moyen d'au moins l'un des éléments suivants :
-- la fonction de détection, SF, détermine les émetteurs de détection et/ou les récepteurs de détection et/ou leurs capacités pour l'opération de service de détection sans fil demandée
-- la fonction de détection, SF, vérifie s'il existe des contraintes spécifiques dans la zone respective, notamment concernant les restrictions concernant l'opération de détection et/ou les émetteurs de détection et/ou les récepteurs de détection ayant les capacités requises,
-- la fonction de détection, SF, configure les émetteurs de détection et/ou les récepteurs de détection.

11. Procédé selon l'une des revendications précédentes, dans lequel la fonction de détection, SF, est ou correspond à une fonction intégrée de détection et de communication, ISACF,
dans lequel notamment il existe au moins trois types de configurations de stations de base pour la détection, à savoir :
-- la fonction de détection, notamment située dans les stations de base, est configurée pour avoir la priorité pour la communication et la capacité de détection ne fonctionne que lorsqu'il y a des ressources libres de la communication ;
-- la fonction de détection, notamment située dans les stations de base, est configurée pour avoir un certain pourcentage statique réservé pour la communication et un certain pourcentage réservé pour la détection, dans lequel si ce seuil est atteint, pour arrêter d'autres tentatives de communication ou de détection ;
-- la fonction de détection, notamment située dans les stations de base, est configurée pour avoir un pourcentage spécifique pour la communication qui ne peut pas être utilisé pour la détection et si ce seuil est atteint, les objectifs de communication préemptent le service de détection s'il y a d'autres tentatives de communication, notamment sauf pour les équipements utilisateurs avec une priorité de détection suffisante.

12. Équipement utilisateur (20) pour être utilisé pour demander et/ou initier une opération de service de détection sans fil fournie par un réseau de communication mobile (100), auquel l'équipement utilisateur (20) est connecté soit via un réseau d'accès radio (110) du réseau de communication mobile (100), soit via un autre réseau d'accès radio d'un autre réseau de communication mobile, dans lequel l'équipement utilisateur (20) est configuré pour communiquer avec une fonction de détection, SF, du réseau de communication mobile (100) et/ou du réseau d'accès radio (110) et/ou de l'autre réseau d'accès radio,
dans lequel, afin de gérer ou d'effectuer l'opération de service de détection sans fil demandée, l'équipement utilisateur (20) est configuré de telle sorte que :
-- l'équipement utilisateur (20) transmet un message de demande de détection, dans lequel au moyen du message de demande de détection, l'équipement utilisateur (20) demande à être fourni avec l'opération de service de détection sans fil demandée,
-- l'équipement utilisateur (20) reçoit un message de réponse de détection répondant au message de demande de détection, le message de réponse de détection indiquant une opération de service de détection sans fil offerte qui peut être fournie par le réseau de communication mobile (100), dans lequel l'opération de service de détection sans fil offerte diffère de l'opération de service de détection sans fil demandée,
-- l'équipement utilisateur (20) transmet un message de confirmation de demande de détection, dans lequel au moyen du message de confirmation de demande de détection, l'équipement utilisateur (20) confirme être fourni avec des services de détection selon l'opération de service de détection sans fil offerte.

13. Système ou réseau de communication mobile (100) pour utiliser un équipement utilisateur (20) pour demander et/ou initier une opération de service de détection sans fil fournie par un réseau de communication mobile (100), le réseau de communication mobile (100) comprenant ou ayant un réseau cœur (120) et l'équipement utilisateur (20) étant connecté au réseau de communication mobile (100) soit via un réseau d'accès radio (110) du réseau de communication mobile (100), soit via un autre réseau d'accès radio d'un autre réseau de communication mobile, dans lequel le réseau de communication mobile (100) et/ou le réseau d'accès radio (110) et/ou l'autre réseau d'accès radio comprend une fonction de détection, SF, dans lequel, afin de gérer ou d'effectuer l'opération de service de détection sans fil demandée, le système ou réseau de communication mobile (100) est configuré de telle sorte que :
-- l'équipement utilisateur (20) transmet un message de demande de détection, dans lequel au moyen du message de demande de détection, l'équipement utilisateur (20) demande à être fourni avec l'opération de service de détection sans fil demandée,
-- l'équipement utilisateur (20) reçoit un message de réponse de détection répondant au message de demande de détection, le message de réponse de détection indiquant une opération de service de détection sans fil offerte qui peut être fournie par le réseau de communication mobile (100), dans lequel l'opération de service de détection sans fil offerte diffère de l'opération de service de détection sans fil demandée,
-- l'équipement utilisateur (20) transmet un message de confirmation de demande de détection, dans lequel au moyen du message de confirmation de demande de détection, l'équipement utilisateur (20) confirme être fourni avec des services de détection selon l'opération de service de détection sans fil offerte.

14. Programme comprenant un code de programme lisible par ordinateur qui, lorsqu'il est exécuté sur un ordinateur et/ou sur un équipement utilisateur (20) et/ou sur un nœud de réseau d'un réseau de communication mobile (100) et/ou sur une fonction de gestion d'accès et de mobilité, AMF, et/ou sur une fonction de détection, SF, et/ou en partie sur un nœud de réseau d'un réseau de communication mobile (100) et/ou en partie sur une fonction de gestion d'accès et de mobilité, AMF, et/ou en partie sur une fonction de détection, SF, amène l'ordinateur et/ou l'équipement utilisateur (20) et/ou le nœud de réseau du réseau de communication mobile (100) et/ou la fonction de gestion d'accès et de mobilité, AMF, et/ou la fonction de détection, SF, à exécuter un procédé selon l'une des revendications 1 à 11.

15. Support lisible par ordinateur comprenant des instructions qui, lorsqu'elles sont exécutées sur un ordinateur et/ou sur un équipement utilisateur (20) et/ou sur un nœud de réseau d'un réseau de communication mobile (100) et/ou sur une fonction de gestion d'accès et de mobilité, AMF, et/ou sur une fonction de détection, SF, et/ou en partie sur un nœud de réseau d'un réseau de communication mobile (100) et/ou en partie sur une fonction de gestion d'accès et de mobilité, AMF, et/ou en partie sur une fonction de détection, SF, amènent l'ordinateur et/ou l'équipement utilisateur (20) et/ou le nœud de réseau du réseau de communication mobile (100) et/ou la fonction de gestion d'accès et de mobilité, AMF, et/ou la fonction de détection, SF, à exécuter un procédé selon l'une des revendications 1 à 11.
